# EUROPÄISCHE PATENTANMELDUNG

(11) **EP 0 911 763 A2**
(43) Veröffentlichungstag der Anmeldung: **28.04.1999**
(21) Anmeldenummer: 98440204.0
(22) Anmeldetag: 11.09.1998
(51) Int. Cl.: G07B 15/00

(54) **System zur Speicherung mindestens einer Datenangabe**

(30) Priorität: 17.10.1997 DE 19745962
(71) Anmelder: ALCATEL, 75088 Paris (FR)
(72) Erfinder: Beier, Wofgang, 71263 Weil der Stadt (DE); Idler, Horst, 70439 Stuttgart (DE)
(74) Vertreter: Schätzle, Albin, Dipl.-Phys.

(57) **Zusammenfassung**

Die Erfindung betrifft ein System zur Speicherung mindestens einer Datenangabe mit einer Datenerfassungs-Vorrichtung und einer Datenübernahme-Vorrichtung, welche mittels eines Startsignals eine drahtlose Datenübertragung von der Datenerfassungs-Vorrichtung zur Datenübernahme-Vorrichtung auslöst. Um Daten manuell und nicht manipulierbar in die Datenerfassungs-Vorrichtung eingeben zu können ist vorgesehen, daß das Startsignal die Datenerfassungs-Vorrichtung von einem ersten Zustand, der eine manuelle Dateneingabe zuläßt in einen zweiten Zustand, in dem die eingegebenen Daten gespeichert und nicht mehr änderbar sind, umschaltet.

## Beschreibung

Die Erfindung betrifft ein System zur Speicherung mindestens einer Datenangabe mit einer Datenerfassungs-Vorrichtung und einer Datenübernahme-Vorrichtung gemäß dem Oberbegriff des Anspruchs 1.

Ein derartiges System mit der Zielsetzung der Erfassung von Fahrtstrecken zur Erhebung von Gebühren ist aus der DE 195 16 061 A1 bekannt. Das System umfaßt als Datenerfassungs-Vorrichtung ein Fahrzeuggerät und als Datenübernahme-Vorrichtungen Feststationen, die an Ein- und Ausfahrten der mit einer Maut-Gebühr belegten Strecke angeordnet sind. Während des Passierens der Feststationen übersendet das Fahrzeuggerät den jeweils aktuellen Kilometerstand. Aus der Differenz des Kilometerstandes an den Ein- und Ausfahrten ergibt sich die Streckenlänge, die beispielsweise zur Erhebung von Maut-Gebühren dient. Das Fahrzeuggerät erfaßt fortlaufend die gefahrenen Kilometer, unabhängig vom jeweiligen Ort. Dies kann durch die Auswertung der Kurssignale eines angeschlossenen Fahrtenschreibers oder auch durch direkte Verbindung mit dem Kilometerzähler des Fahrzeugs erfolgen. Problematisch dabei ist das Erfordernis einer fahrzeugseitigen Ausrüstung, die eine fest installierte Signalverbindung voraussetzt. Eine solche bauliche Veränderung am Fahrzeug kann jedoch von Ausländern, die ein inländisches, mautpflichtiges Gebiet durchfahren wollen, nicht verlangt werden. Deshalb werden bisher vorwiegend Papiervignetten eingesetzt. Dabei handelt es sich um ein Formblatt, das der Fahrer des PKW bzw. des LKW vor der Einfahrt in den mautpflichtigen Bereich auszufüllen hat. Üblicherweise sind anzugeben der Fahrzeugtyp, gegebenenfalls der Anhängertyp, der Gültigkeitszeitraum, das Landeszeichen und das Fahrzeug kennzeichen. Durch diese Identifizierung des Fahrzeuges ergeben sich erhebliche Datenschutzbedenken. Außerdem ist das Vignetten-Verfahren zeitaufwendig, unbequem und teuer.

Der Erfindung liegt die Aufgabe zugrunde, ein gattungsmäßiges System mit einer Datenerfassungs-Vorrichtung und einer Datenübernahme-Vorrichtung anzugeben, welches einen autarken Betrieb der Datenerfassungs-Vorrichtung bei manueller Dateneingabe und zeitweiser Sperrung weiterer oder verändernder Eingaben gestattet.

Die Aufgabe wird mit den kennzeichnenden Merkmalen des Anspruchs 1 gelöst. Durch die Doppelnutzung des Funksignals, nämlich einerseits zur Auslösung der Datenübertragung von der Datenerfassungs-Vorrichtung zur Datenübernahme-Vorrichtung und andererseits zur Umschaltung der Datenerfassungs-Vorrichtung in einen nicht mehr manipulierbaren Zustand, ergibt sich ein einfaches System zur Datenspeicherung.

Bei der Anwendung zur streckenabhängigen Gebührenerfassung von Fahrzeugen gemäß Anspruch 2 erweist sich die völlig autarke Betriebsweise der im Fahrzeug befindlichen Mautbox als besonders vorteilhaft. Diese Mautbox benötigt keinerlei Verbindung mit Fahrzeugsystemen, so daß sich die Möglichkeit ergibt, die Mautbox - quasi wie eine Vignette - spätestens im Einfahrbereich der Mautstrecke - beispielsweise leihweise - zur Verfügung zu stellen. Dem Gleichbehandlungsprinzip von Ausländern und Inländern ist dabei genüge getan. Vor dem Passieren der Gebührenerfassungsstation wird von einer für das Fahrzeug verantwortlichen Person, im allgemeinen dem Fahrer, ein Anfangskilometerstand von einem ordnungsgemäßen Kilometerzähler abgelesen und über eine Tastatur in die Mautbox eingegeben. Während des Passierens der Gebührenerfasssungsstation wird dieser Anfangskilometerstand nicht manipulierbar zusammen mit dem Orts- und Zeitstempel der gebührenerfassungsstationseitigen Sende-/Empfangs-Bake elektronisch eingefroren. Innerhalb des gebührenpflichtigen Gebietes können diese Daten nur von dazu befugten Kontrollpersonen fernabgefragt werden. Erfolgt diese Abfrage in einer definierten Enfernung zur Gebührenerfassungsstation, beispielsweise in einem Zoll bereich, kann der ordnungsgemäße Eintrag des Anfangszählerstandes durch Plausibilitätskontrolle leicht - stichprobenweise - verifiziert werden.

Das Landeszeichen und die Fahrzeugnummer müssen nicht eingegeben werden, da das Fahrzeug durch die Eingabe der Kilometerstände identifiziert ist. Dadurch ergibt sich ein erheblicher Datenschutzvorteil gegenüber der Vignetten-Lösung.

Um eine Differenzierung der Mautgebühr für verschiedene Fahrzeug konfigurationen zu ermöglichen, kann gemäß Anspruch 3 vorgesehen sein, daß der Fahrer außer dem Kilometerstand auch Informationen zum Fahrzeugtyp und gegebenenfalls zum Anhängertyp eingibt.

Bevorzugt ist gemäß Anspruch 4 ein Display zur Visualisierung der eingegebenen Daten vorgesehen. Damit ist nicht nur eine Eigenkontrolle der eingegebenen Daten durch den Fahrer möglich, sondern auch eine Kontrollmöglichkeit für befugtes Personal innerhalb des mautpflichtigen Gebietes gegeben. Anhand des aktuellen Kilometerstandes und des am Display angezeigten Einfahr-Kilometerstandes ist auf einfache Weise eine Überprüfung der Richtigkeit des durch den Fahrer eingegebenen Kilometerstandes möglich.

Eine weitere Kontrollmöglichkeit ergibt sich durch die Merkmale des Anspruchs 5, wobei hier die Überprüfung direkt an der Gebührenerfassungsstation stattfindet. Dazu wird der von dem Fahrer gerade in die Mautbox eingegebene und am Kontrollmonitor der Gebührenerfasssungsstation angezeigte Kilometerstand mit dem tatsächlichen Kilometerstand verglichen. Die Größe des Monitors und dessen Anordnung sind derart getroffen, daß die Kontrollperson gleichzeitig die Kilometerstands-Anzeige im Fahrzeug und den eingefrorenen Kilometerstand am Monitor ablesen kann.

Das Startsignal, das die Datenübertragung und das Einfrieren der eingegebenen Daten auslöst, sowie die Datenübertragung selbst können gemäß Anspruch 6 durch jegliche Art drahtloser Kommunikation realisiert sein. Dabei kann das Startsignal anderer Natur sein als die Datenübertragung.

Vorzugsweise ist gemäß Anspruch 7 eine Kommunikation zwischen der Mautbox des Fahrzeugs und der Sende-/Empfangs-Bake der Gebührenerfassungsstation auf der Basis einer DSRC-Funkstrecke im 5,8 GHz Mikrowellenbereich vorgesehen. Die Reichweite dieser Mikrowellenübertragung auf dem inzwischen europagenormten DSRC-Verfahren (Dedicated Short Range Communication) ist für den Abstand von wenigen Metern zwischen Mautbox und Sende-/Empfangs-Bake ideal.

Die Erfindung wird nachfolgend anhand eines figürlich dargestellten Ausführungsbeispiels näher erläutert.

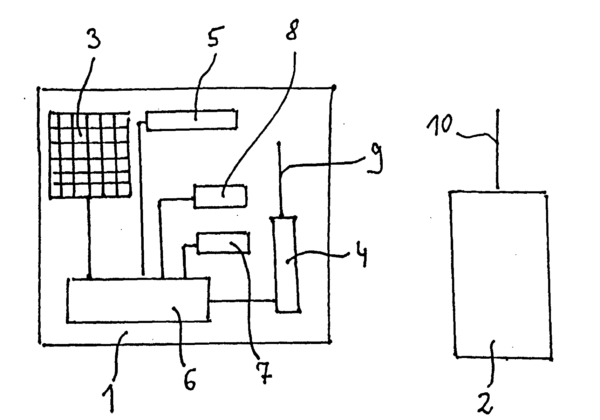

Die Figur zeigt schematisch die beiden wesentlichen Bestandteile eines Mauterfassungs-Systems, nämlich eine Mautbox 1, die in einem Fahrzeug angeordnet ist und eine Sende-/Empfangs-Bake 2, die Bestandteil einer Gebührenerfassungsstation ist. Solche Gebührenerfassungsstationen befinden sich häufig an Grenzen ausgesprochener Transitländer, wobei bisher vorwiegend nur für Lastkraftwagen streckenabhänige Gebühren gefordert werden. Diese Art der Gebührenerhebung wird jedoch zukünftig zunehmende Bedeutung auch für den Personenkraftwagen-Verkehr haben. Außerdem sind gestaffelte Gebühren, beispielsweise für die Brücken- oder Tunnelbenutzung, denkbar. Als wesentliche Bestandteile weist die Mautbox 1 eine Eingabeeinrichtung 3, eine Übertragungseinrichtung 4 und ein Display 5 auf. Diese Baugruppen 3, 4 und 5 sind über ein Steuergerät 6 miteinander verbunden. Das Steuergerät 6 umfaßt mindestens einen ersten Speicher 7 und einen zweiten Speicher 8, wobei der erste Speicher 7 für den mittels der Eingabeeinrichtung 3 eingegebenen Einfahr-Kilometerstand und der zweite Speicher 8 für den ebenfalls mittels der Eingabeeinrichtung 3 eingegbenen Ausfahr-Kilometerstand vorgesehen sind. Zur Kommunikation zwischen der Mautbox 1 und Sende-/Empfangs-Bake 2 sind diese jeweils mit Antennen 9 und 10 versehen. Die beiden Antennen 9 und 10 sind für 5,8 GHz DSRC (Decidated Short Range Communication) konfiguriert. Die Antenne 10 in der Sende-/Empfangs-Bake 2 ist dem Fahrzeug entgegen gerichtet und ca. 45 ° nach unten geneigt. Somit ist ein Bereich der Fahrspur von ca. 3 x 3 m im Abstand von 3 m unterhalb der Antenne 10 erfaßt und versorgt. Die Sende-/Empfangs-Bake 2 hat etwa die Größe eines Schuhkartons, ein Gewicht von ca. 12 kg und hängt zwischen 4,8 m und 5,8 m über der zur bedienenden Fahrspur.

Die Funktion dieses Mauterfassungs-Systems wird im folgenden beschrieben:

Der Fahrer des Fahrzeugs erhält, beispielsweise an einer Grenzstation, eine Mautbox 1 zur ständigen Benutzung oder nur zum Durchfahren des mautpflichtigen Gebietes und anschließender Zurückgabe. Die Größe der Mautbox 1 kann ca. der eines Mobiltelefons entsprechen. Unmittelbar vor dem Passieren einer ersten Gebührenerfasssungsstation gibt der Fahrer mittels der Eingabeeinrichtung 3 den aktuellen Kilometerstand seines Fahrzeugs in die Mautbox 1 ein. Die Eingabeeinrichtung 3 kann zusätzlich auch noch Sondertasten zur Wahl der Fahrzeugkonfiguration, beispielsweise verschiedener LKW-Größen und Anhänger-Größen, aufweisen. Anschließend bringt der Fahrer die Mautbox 1 "elektronisch gut sichtbar" innen an der Windschutzscheibe, gegebenenfalls in einem Halter, an. Der eingegebene Kilometerstand wird als echt und nicht manipuliert vorausgesetzt. Landeszeichen und Fahrzeug kennzeichen müssen nicht eingegeben werden. Durch den Kilometerstand ist das Fahrzeug hinreichend genau identifiziert. Hernach passiert das Fahrzeug eine Markierung, die optisch durch einen gelben Strich auf der Fahrbahn und elektronisch quasi als Mikrowellenvorhang realisiert sind, wodurch ein Startsignal seitens der Sende-/Empfangs-Bake 2 ausgelöst wird. Das Startsignal bewirkt zum einen, daß die in die Mautbox 1 eingegebenen Daten über die Antennen 9 und 10 an die Sende-/Empfangs-Bake übermittelt werden und zum anderen, daß diese Daten in der Mautbox 1 eingefroren werden, das heißt, daß ein Umschaltvorgang ausgelöst wird, durch den die eingegebenen Daten im ersten Speicher 7 eingeschrieben und nicht mehr änderbar sind. Analog vollzieht sich der Vorgang beim Verlassen des mautpflichtigen Gebietes, wobei dann der aktuelle Kilometerstand in den zweiten Speicher 8 eingeschrieben wird. Zu diesem Zeitpunkt kann die streckenabhänige Mautgebühr sofort erhoben werden. Möglich ist jedoch auch eine Kontingentierung, insbesondere für LKW-Flotten, eine turnusmäßige Abrechnung viertel jährlich, halbjährlich oder dergleichen sowie jegliche andere, insbesondere bargeldlose, Zahlungweise. Die Mautbox 1 kann nunmehr zurückgegeben werden oder zur erneuten Benutzung auf Reset oder Summation gesetzt werden.

Die Erfindung beschränkt sich nicht auf das vorstehend beschriebene Ausführungsbeispiel. Vielmehr ist eine Anzahl von Varianten denkbar, welche auch bei grundsätzlich anders gearteter Ausführung von den Merkmalen der Erfindung Gebrauch machen. Insbesondere beschränkt sich die Erfindung nicht auf die Anwendung auf Mautstationen für straßengebundenen Verkehr. Denkbar ist auch eine Anwendung im Schienen- oder Wasserstraßen oder Luftverkehr. Auch kann die beanspruchte Lösung zur Festschreibung von Speicherzuständen bei Fernsteuerungen im weitesten Sinne angewendet werden.

## Patentansprüche

1. System zur Speicherung mindestens einer Datenangabe mit einer Datenerfassungs-Vorrichtung und einer Datenübernahme-Vorrichtung, welche mittels eines Startsignals eine drahtlose Datenübertragung von der Datenerfassungs-Vorrichtung zur Datenübernahme-Vorrichtung auslöst,
dadurch gekennzeichnet,
daß das Startsignal die Datenerfassungs-Vorrichtung von einem ersten Zustand, der eine manuelle Dateneingabe zuläßt, in einen zweiten Zustand, in dem die eingegebenen Daten gespeichert und nicht mehr änderbar sind, umschaltet.

2. System nach Anspruch 1, dadurch gekennzeichnet, daß die Datenerfassungs-Vorrichtung als in einem Fahrzeug befindliche Mautbox (1) und die Datenübernahme-Vorrichtung als einer Gebührenerfassungsstation zugeordnete Sende-/Empfangs-Bake (2) ausgebildet sind, wobei die manuelle Dateneingabe den aktuellen Kilometerstand des Fahrzeugs umfaßt.

3. System nach Anspruch 2, dadurch gekennzeichnet, daß die manuelle Dateneingabe außerdem Informationen zum Fahrzeugtyp und gegebenenfalls zum Anhängertyp umfaßt.

4. System nach einem der vorangehenden Ansprüche, dadurch gekennzeichnet, daß die Datenerfassungs-Vorrichtung ein Display (5) zur Visualisierung der eingegebenen Daten umfaßt.

5. System nach einem der vorangehenden Ansprüche, dadurch gekennzeichnet, daß die Datenübernahme-Vorrichtung einen Kontrollmonitor zur Visulisierung der übertragenen Daten umfaßt.

6. System nach einem der vorhergehenden Ansprüche, dadurch gekennzeichnet, daß zur Kommunikation zwischen der Datenerfassungs-Vorrichtung und der Datenübernahme-Vorrichtung optische oder magnetische oder funktechnische Mittel vorgesehen sind.

7. System nach Anspruch 6, dadurch gekennzeichnet, daß funktechnische Mittel auf Basis der 5,8 GHz DSRC (Dedicated Short Range Communication) vorgesehen sind.
